Europäisches Patentamt

European Patent Office

Office européen des brevets

(11) Publication number: **0 078 119**
**B1**

## (12) EUROPEAN PATENT SPECIFICATION

(45) Date of publication of patent specification: **11.09.85**

(21) Application number: **82305354.1**

(22) Date of filing: **08.10.82**

(51) Int. Cl.⁴: **C 04 B 28/20,** C 01 B 33/24

(54) Calcium silicate base materials.

(30) Priority: **28.10.81 US 315695**

(43) Date of publication of application:
**04.05.83 Bulletin 83/18**

(45) Publication of the grant of the patent:
**11.09.85 Bulletin 85/37**

(84) Designated Contracting States:
**BE DE GB IT NL**

(56) References cited:
**EP-A-0 007 585**
**EP-A-0 009 836**
**DE-A-2 936 169**
**GB-A-2 000 753**

(73) Proprietor: **Horton, William George**
**Badgers Gill Batt House Road**
**Stocksfield Northumberland (GB)**

(72) Inventor: **Horton, William George**
**Badgers Gill Batt House Road**
**Stocksfield Northumberland (GB)**

(74) Representative: **Virr, Dennis Austin et al**
**Reid Sharpe Floor B Milburn House Dean Street**
**Newcastle upon Tyne NE1 1LE (GB)**

Courier Press, Leamington Spa, England.

## Description

This invention relates to improved calcium silicate materials and to processes for manufacture of such materials.

Calcium silicate materials comprising a crystalline matrix of calcium silicate consisting predominantly of xonotlite and/or tobermorite are known and used widely in applications involving hot face temperatures above about 600°C. These are produced generally by mixing silica with calcium hydroxide (usually as slaked lime) and autoclaving before or after moulding. United States Patent Specification No. 4238240 summarises a number of previous patents exemplifying such processes. The thermal insulating materials thus produced have limited life at above 1000°C and are generally, after heating fragile, and the materials may also be subject to a degree of superficial shrinkage on drying which creates production problems and defects in moulded articles, such as slabs, moulded from the materials.

It is also known to add a quantity of wood pulp or other cellulose fibres, rock wool, and/or diatomaceous earth. It has also been proposed, in British Patent Specification 1,462,242 to add clay or the like to a reacted slurry of hydrated calcium silicates, but this requires a longer moulding time and the shrinkage on drying of the moulded product increases proportionately to the amount of clay added.

An object of the invention is to provide a calcium silicate based material with improved thermal insulating properties and improved strength after heating, and reduced superficial shrinkage on drying.

The invention accordingly provides a calcium silicate based material comprising a crystalline matrix of calcium silicate consisting predominantly of xonotlite and/or tobermorite, characterised in that free silica has been added to the material to occupy interstices of the matrix.

Advantageously a source of calcium ions is also present, residual from the matrix-producing reaction, or added with or immediately after or before the addition of the free silica, such as for example a suspension of calcium oxide, or slaked lime.

The silica added is preferably amorphous in structure, with generally spherical particles and having a surface area per unit mass greater than 5 $m^2/g$. More preferably, the silicon is added in the form of a finely divided powder with a surface area in the range of 10 to 250 $m^2/g$, such as silica fume recovered for example from the manufacture of silicon metal or from the manufacture of ferro silicon.

The invention also provides a method of making a calcium silicate based material comprising reacting silica and calcium oxide to produce a matrix of crystalline calcium silicate consisting predominantly of xonotlite and/or tobermorite, characterised in that after completion of the reaction, free silica is added thereto to occupy interstices of the matrix.

Advantageously calcium ions are also present or added, in for example the form of a solution of calcium oxide or slaked lime preferably in a quantity sufficient to react with surface layers only of the silica particles whereby the particles may be "cementitiously" bonded together, without substantial loss of the thermal properties of the silica.

The slurry of calcium oxide and silica used to produce the crystalline matrix may additionally contain a small quantity of manganese, magnesium or other ions capable of being incorporated in the calcium silicate crystal structure. Such additions enable a higher solids content to be present in the slurry without the expected increase in viscosity. They do however unacceptably increase the thermal shrinkage at 1000°C which is more than offset by the addition of free silica.

The slurry of lime and silica is preferably autoclaved, after which silica (and calcium ions or a suitable source of such ions as required) are added at a temperature necessary to permit the cementitious reaction to occur (usually above 75°C) together with a suitable quantity and type of non-asbestos fibre. The slurry is then moulded. The resulting slabs are then dried, or may be subjected to further autoclaving before drying.

Suitable calcium salts which dissociate in aqueous solutions may be used as a calcium ion source, provided the anion of the salt does not itself have adverse effects on the product. For this reason calcium chloride is not suitable.

The material and method of the invention will now be further described and the inventive concept explained hereinafter and with reference to the following examples.

Example I
Experiment illustrating the underlying concept of the invention

10 g of silica fume (a very finely divided form of silica having a surface area of 14 $m^2/g$) was stirred with 1 litre of distilled water at 80°C. The slurry was filtered and the resultant filter cake completely dried in a laboratory oven at 110°C. The dried cake crumbled easily between the fingers.

The above steps were repeated using the hot filtrate from a well reacted slurry originally comprising equimolar proportions of calcium oxide and silica in distilled water and having a pH of 9—9.5. This dried cake was significantly less crumbly.

These observations may be explained in that Jennite or other well recognised species of calcium silicate are formed under these conditions. Due to the limited quantity of calcium ions present in the latter filtrate, the reaction is probably superficial only, but sufficient to provide adequate cementitious bonding between the particles of silica, and possibly also to the existing calcium silicate if, as proposed in the present invention, this reaction were carried out after formation of a crystalline matrix of calcium silicate.

2

The reaction between lime and silica to make calcium silicate proceeds in several stages and is well-known. It is generally agreed that this reaction can be represented as:—

$$C+S \rightarrow C_2SH \rightarrow CSHI \rightarrow CSHII \rightarrow \text{xonotlite/tobermorite}$$

where $C=CaO$, $S=SiO_2$, and $H=H_2O$.

The reaction is time and temperature dependent. A description of this multi-step process is given in Canadian Patent 601,124 at column 3 line 41 to column 4 line 11.

In one embodiment of this invention, to make high temperature resistant calcium silicate with good thermal shrinkage and a high compressive strength after heating, free silica is added at a stage where subtantially only xonotlite is present, i.e. there is no free lime or free silica left from the reaction constituents but sufficient calcium was present to participate in a surface reaction with the added silica in the manner described. In another embodiment the reaction product also includes some tobermorite.

In a developed embodiment, the free silica is added with a source of calcium ions, by way of non-exclusive example slaked lime to promote a superficial reaction of the kind bonding the silica particles as explained in connection with Example 1 above.

Free silica can be added at that stage of the reaction between lime and silica slurry whereby the thermal properties, and therefore physical properties of the free silica are not significantly modified as a result of reaction with excess calcium ions arising from incomplete reaction between the lime and silica initially present in the slurry. This is probably at the CSHI stage or later.

By adding free silica a significant improvement in the thermal shrinkage of the dried moulded material made from a well reacted slurry on drying, is achieved. Consistently the thermal shrinkage at 1000°C for 24 hours is about 0.6% to 0.9%, about 1.2% at 1040°C and about 3.0% at 1065°C when free silica is added to the calcium silicate matrix. Promotion of a bonding reaction by adding calcium ions to produce a superficial reaction does not significantly affect the advantage gained in this respect in adding the free silica.

Further examples of the effects of adding free silica in accordance with this invention can be seen from the following examples.

Example 2
Without free silica

The reaction product was prepared by reacting approximately equimolar amounts of lime and silica for 45 minutes at 150°C, and then for 3 hours above 170°C. Five percent by weight of wood pulp and mineral wool in equal amounts was added to the slurry produced by the reaction. No manganese acetate was added to the reaction constituents. The reaction product was moulded and then calcined for 24 hours at 1000°C. Thermal shrinkage without any addition of free silica of three separately reacted and prepared samples was 1.16%; 2.98%; and 2.87% respectively.

Example 3
With free silica

The reaction product was prepared in the same manner as in Example 2, but manganese acetate was added to the reaction constituents. The manganese acetate addition was at the level of 1.5%. Five percent wood pulp was added, instead of 2.5% each of wood pulp and mineral wool, and 10% by weight of free·silica was added to half the reaction product and the resultant liquor moulded. The remaining half of the liquor was moulded without any silica addition. The slabs were dried and calcined at 1000°C. The variation in the fibre addition is not believed to have affected the result. The comparative results obtained are set out below in Table 1.

TABLE 1

| Reaction | Without 10% free silica (Example 2) % | With 10% free silica (Example 3) % |
|---|---|---|
| 1 | 5.54 | 0.86 |
| 2 | 4.08 | 0.80 |
| 3 | 5.98 | 0.87 |
| 4 | 5.99 | — |
| 5 | — | 0.81 |
| 6 | — | 0.73 |
| 7 | — | 0.63 |
| 8 | — | 0.73 |

3

It will thus be seen that the addition of free silica not only materially reduces the shrinkage of the material (from about 2% to under 1%) but also obviates the excessive thermal shrinkage caused by addition of "doping" ions such as manganese.

Example 4
Added silica with calcium ions

3.4 Litres of well reacted calcium oxide and silica made by reacting equimolar proportions in aqueous suspension and recognised as well reacted by X-ray diffraction, were divided into 2 portions. To the first portion (1.7 litres) 100 ml of an aqueous slurry of slaked lime with 5 g well dispersed wood pulp and 10 g of silica fume were added. The resultant aqueous mix was heated to 90°C and filtered in a large Buchner funnel. The resultant disc like cake was dried at 110°C to constant weight.

This procedure was repeated with the second half of the liquor, but without addition of the 10 g of silica fume. The diameters of the wet and dried cakes were measured and the superficial drying shrinkages measured.

The results showed that superficial shrinkage without silica addition averaged 10% but with the silica shrinkage averaged 4% approx.

Note. The superficial shrinkage for a given reaction liquor is dependent upon many factors and in practice can vary usually over the range 3—12%. In all cases the additions of free silica reduces the superficial shrinkage. The addition of calcium ions by way of slaked lime does not significantly effect this property achieved by the silica addition, but does improve the strength of the material.

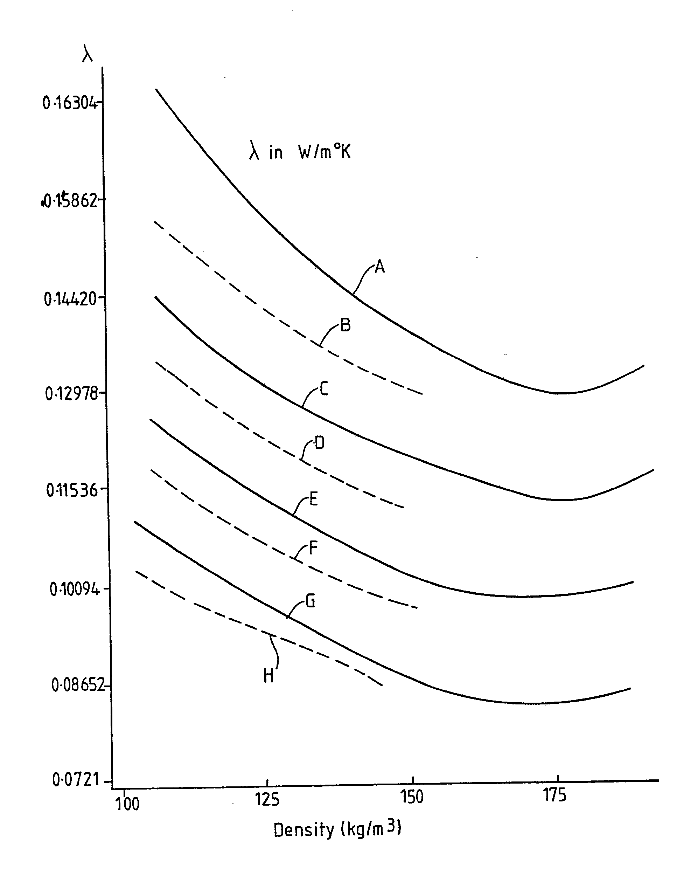

The accompanying drawing is a plot of heat transmission (lambda) against material density in $kg/m^3$ for a calcium silicate material without silica addition (full line curves) and with silica addition (broken line curves), at different temperatures.

Curves A and B are derived from measurements taken at 550°C mean temperature. Curves C and D are derived from measurements taken at 500°C mean temperature. Curves E and F are derived from measurements taken at 450°C mean temperature. Curves G and H are derived from measurement taken at 400°C mean temperature.

The broken line curves show that the thermal conductivity of the material according to this invention is significantly lower at any given temperature than that of calcium silicate made without free silica. The addition of free silica of a much higher surface area will greatly enhance this difference. The measurements of the free silica containing material have only been conducted up to densities of about 150 $kg/m^3$, but the curves may reasonably be extrapolated to have the same general shape and gradients as those for the material without free silica which have been measured up to densities of about 200 $kg/m^3$.

The material according to the invention has the additional advantage that whereas most calcium silicate materials tend to soften after calcination, when free silica with or without calcium ion aided cementitious binding of the silica are added, the compressive strength of the calcium silicate is effectively unchanged as illustrated by the following data:—

TABLE 2
Compressive strength (KiloNewtons per square meter)

Before treating to 1000°C for 24 hours=1350 $KN/m^2$

After heating to 1000°C for 24 hours=1625 $KN/m^2$

**Claims**

1. A calcium silicate based material comprising a crystalline matrix of calcium silicate consisting predominantly of xonotlite and/or tobermorite, characterised in that free silica has been added to the material to occupy interstices of the matrix.

2. A material according to claim 1 characterised in that a source of calcium ions is present or has been added to the matrix.

3. A material according to claim 2 characterised in that the source of calcium ions is any one of calcium oxide; calcium hydroxide; or a calcium salt which dissociates in aqueous solution and the anion of which has no disadvantageous effect on the properties of the material.

4. A material according to claim 1, 2 or 3 characterised in that the free silica has a high surface area per unit mass greater than 5 $m^2/g$ and is amorphous in structure with generally spherical particles.

5. A material according to claim 4 characterised in that the surface area of said free silica is in the range of 10 to 250 $m^2/g$.

6. A material according to claim 4 or 5 characterised in that said free silica is silica fume recovered from the manufacture of silicon metal or from the manufacture of ferro silicon.

7. A method of making a calcium silicate based material comprising reacting silica and calcium oxide to produce a matrix of crystalline calcium silicate consisting predominantly of xonotlite and/or tobermorite, characterised in that after completion of the reaction, free silica is added thereto to occupy interstices of the matrix.

4

# 0 078 119

8. A method according to claim 7 characterised in that calcium ions are present in solution from the reaction forming the matrix.

9. A method according to claim 7 characterised in that a source of calcium ions is added to the material.

10. A method according to claim 8 or 9 characterised in that the calcium ions are added or are present in a quantity which permits a reaction with the particles of the added silica whereby the silica particles are bound together without significant loss of the thermal properties of the silica or the matrix wherein it is contained.

11. A method according to claim 7 characterised in that the free silica is finely divided with a surface area of 10—250 m² per g.

12. A method according to claim 11 wherein the free silica is silica fume recovered from the manufacture of silicon metal or from the manufacture of ferro silicon.

13. A method according to any one of claims 9 to 12 characterised in that the source of added calcium ions is any one of calcium oxide, calcium hydroxide or a calcium salt which dissociates in aqueous solution and the anion of which has no disadvantageous effect on the properties of the material.

## Patentansprüche

1. Kalziumsilikatwerkstoff, bestehend aus einer kristallinen Matrix von Kalziumsilikat, welcher überwiegend Xonolit und/oder Tobermorit enthält, dadurch gekennzeichnet, daß dem Werkstoff freie Kiselsäure zur Besetzung der Zwischengitterplätze der Matrix zugefügt ist.

2. Werkstoff nach Anspruch 1, dadurch gekennzeichnet, daß eine Kalziumionenquelle eingeführt oder der Matrix hinzugefügt ist.

3. Werkstoff nach Anspruch 2, dadurch gekennzeichnet, daß die Kalziumionenquelle aus Kalziumoxid, Kalziumhydroxid oder aus Kalziumsalz besteht, welches in wässriger Lösung dissoziiert, wobei dessen Anion keine nachteilige Wirkung auf die Eigenschaften des Werkstoffes ausübt.

4. Werkstoff nach Anspruch 1, 2 oder 3, dadurch gekennzeichnet, daß die freie Kieselsäure eine große Oberfläche pro Masseneinheit, größer als 5 m²/g, und eine amorphe Struktur mit im allgemeinen kugelförmigen Partikeln aufweist.

5. Werkstoff nach Anspruch 4, dadurch gekennzeichnet, daß die Oberfläch der genannten freien Kieselsäure im Bereich von 10 bis 250 m²/g liegt.

6. Werkstoff nach Anspruch 4 oder 5, dadurch gekennzeichnet, daß die freie Kieselsäure aus Kieselsäuredampf besteht, der bei der Herstellung von Siliciummetall oder bei der Herstellung von Ferrosilicium wiedergewonnen wird.

7. Verfahren zur Herstellung eines Kalziumsilikatwerkstoffes, bestehend aus der Reaktion von Kieselsäure und Kalziumoxid zur Herstellung einer kristallinen Matrix vom Kalziumsilikat, welche überwiegend aus Xonolit und/oder Tobermorit besteht, dadurch gekennzeichnet, daß nach der Vervollständigung der Reaktion freie Kieselsäure hinzugefügt wird, um die Zwischengitterplätze der Matrix zu besetzen.

8. Verfahren nach Anspruch 7, dadurch gekennzeichnet, daß Kalziumionen in Lösung bei der die Matrix bildenden Reaktion eingeführt werden.

9. Verfahren nach Anspruch 7, dadurch gekennzeichnet, daß eine Kalziumionenquelle dem Werkstoff hinzugefügt wird.

10. Verfahren nach Anspruch 8 oder 9, dadurch gekennzeichnet, daß die Kalziumionen in einer Menge hinzugefügt oder eingeführt werden, welche eine Reaktion mit den Teilchen der hinzugeführten Kieselsäure erlaubt, wobei die Kieselsäureteilchen ohne beträchtlichen Verlust der thermischen Eigenschaften der Kieselsäure oder der Matrix, in welche sie eingebettet ist, miteinander verbunden werden.

11. Verfahren nach Anspruch 7, dadurch gekennzeichnet, daß die freie Kieselsäure mit einer Oberfläche von 10 bis 250 m²/g fein zerteilt ist.

12. Verfahren nach Anspruch 11, dadurch gekennzeichnet, daß die freie Kieselsäure aus einem Kieselsäuredampf besteht, der bei der Herstellung von metallischem Silicium oder bei der Herstellung von Ferrosilicium wiedergewonnen wird.

13. Verfahren nach irgendeinem der Ansprüche 9 bis 12, dadurch gekennzeichnet, daß die Quelle der hinzugefügten Kalziumionen aus Kalziumoxid, Kalziumhydroxid oder einem Kalziumsalz besteht, welches in wässriger Lösung dissoziiert und von welchem das Anion keine nachteilige Wirkung auf die Eigenschaften des Werkstoffes hat.

## Revendications

1. Matériau à base de silicate de calcium du genre comprenant un réseau cristallin de silicate de calcium constitué de manière prédominante par de la xonotlite et/ou de la tobermorite, caractérisé en ce que de la silice libre a été ajoutée au matériau en vue d'occuper les interstices du réseau.

2. Matériau suivant la revendication 1, caractérisé en ce qu'une source d'ions calcium se trouve dans le réseau ou a été ajoutée à celui-ci.

3. Matériau suivant la revendication 2, caractérisé en ce que la source d'ions calcium est l'une quelconque des suivantes: oxyde de calcium; hydroxyde de calcium; ou un sel de calcium qui se dissocie dans une solution aqueuse et dont l'anion n'a pas d'effet néfaste sur les propriétés du matériau.

4. Matériau suivant l'une quelconque des revendications 1, 2 ou 3, caractérisé en ce que la silice libre a une aire de surface élevée par unité de masse, supérieure à 5 m²/g et est de structure amorphe à particules généralement sphériques.

5. Matériau suivant la revendication 4, caractérisé en ce que l'aire de surface de la silice libre est comprise entre 10 et 250 m²/g.

6. Matériau suivant l'une quelconque des revendications 4 ou 5, caractérisé en ce que la silice libre est de la fumée de silice obtenue à partir de la fabrication du silicium métallique ou à partir de la fabrication du ferro-silicium.

7. Procédé pour la fabrication d'un matériau à base de silicate du genre dans lequel on fait réagir de la silice et de l'oxyde de calcium pour produire un réseau de silicate de calcium cristallin consistant de manière prédominante en de la xonotlite et/ou de la tobermorite, caractérisé en ce qu'après achèvement de la réaction, de la silice libre est ajoutée en vue d'occuper les interstices du réseau.

8. Procédé suivant la revendication 7, caractérisé en ce que des ions calcium sont présents dans la solution provenant de la réaction destinée à constituer le réseau.

9. Procédé suivant la revendication 7, caractérisé en ce qu'une source d'ions calcium est ajoutée au matériau.

10. Procédé suivant l'une quelconque des revendications 8 ou 9, caractérisée en ce que des ions calcium sont ajoutés ou sont présents en quantité permettant une réaction avec les particules de silice incorporée de manière que ces particules de silice soient associées ensemble sans perte significative des propriétés thermiques de la silice ou du réseau dans lequel elle se trouve.

11. Procédé suivant la revendication 7, caractérisé en ce que la silice libre est finement divisée en ayant une aire de surface de 10—250 m²/g.

12. Procédé suivant la revendication 11, caractérisé en ce que la silice est une fumée de silice obtenue à partir de la fabrication de silicium métallique ou à partir de la fabrication de ferro-silicium.

13. Procédé suivant l'une quelconque des revendications 9 à 12, caractérisé en ce que la source d'ions calcium additionnels est soit un oxyde de calcium, soit un hydroxyde de calcium, soit encore un sel de calcium qui se dissocie en une solution aqueuse et dont l'anion n'a pas d'effet néfaste sur les propriétés du matériau.